# FASCICULE DE BREVET EUROPEEN

(11) **EP 4 469 319 B1**
(45) Date de publication et mention de la délivrance du brevet: **22.07.2026**
(21) Numéro de dépôt: 22844665.4
(22) Date de dépôt: 07.12.2022
(51) Int. Cl.: B60W 10/02, B60W 10/04, B60W 10/10, B60W 10/18, B60W 30/18, B60W 50/08, B60W 50/10, F16H 63/34, B60W 20/40, B60W 20/50, B60W 50/00

(54) **PROCÉDÉ DE CONTRÔLE D'UN GROUPE MOTOPROPULSEUR DE VÉHICULE HYBRIDE COMPORTANT UN BLOCAGE DE PARKING**
VERFAHREN ZUR STEUERUNG EINES HYBRIDFAHRZEUGANTRIEBSSTRANGS MIT EINER PARKSPERRE
METHOD FOR CONTROLLING A HYBRID VEHICLE POWER TRAIN, COMPRISING A PARK LOCK

(30) Priorité: 26.01.2022 FR 2200675
(43) Date de publication de la demande: 04.12.2024
(73) Titulaire: Stellantis Auto SAS, 78300 Poissy (FR)
(72) Inventeur: TROJANI, Joseph, 89100 SENS (FR); AUDY, Nicolas, 92500 RUEIL MALMAISON (FR)
(74) Mandataire: PSIP
(86) Numéro de dépôt international: PCT/FR2022/052266
(87) Numéro de publication internationale: WO 2023/144462

(56) Documents cités:
- EP-A1- 2 584 227
- WO-A1-2016/133453
- DE-A1- 102008 063 611
- DE-C1- 19 715 384

## Description

La présente invention concerne un procédé de contrôle d'un groupe motopropulseur de véhicule automobile hybride comportant un blocage de parking, ainsi qu'un véhicule hybride équipé de dispositifs mettant en œuvre un tel procédé.

Les véhicules automobiles disposant d'une boîte de vitesses automatique comportent généralement dans cette boîte un blocage de parking, appelé « Park Lock » en langue anglaise, comprenant un doigt qui dans un mouvement d'engagement descend dans un cran d'une couronne reliée aux roues motrices du véhicule, pour quand il est actionné verrouiller cette couronne et ainsi assurer un blocage complet des roues, et du véhicule lors de son stationnement. Dans un mouvement de dégagement le doigt est remonté pour libérer les roues.

Un type de mécanisme de changement de vitesse pour commander une boîte de vitesses automatique, présenté notamment par le document US-A-5220984, comporte un levier de vitesse qui commande des positions parking, roulage en marche arrière, neutre et roulage en marche avant, équipé d'une dent en forme de cliquet qui s'engage dans une encoche afin de maintenir ce levier dans la position de parking.

Un solénoïde monté sur le levier permet un verrouillage de la dent pour l'empêcher de sortir de l'encoche dans certaines conditions, en particulier si le conducteur n'a pas appuyé sur les freins du véhicule afin de maintenir ce véhicule immobilisé lors du déblocage et d'éviter un déplacement incontrôlé pouvant causer des accidents.

Par ailleurs les véhicules hybrides comportent un groupe motopropulseur comprenant au moins une machine électrique de traction, et un moteur thermique démarré avec une machine électrique propre, avec cette machine de traction ou avec ces deux motorisations, le conducteur mettant en action ce groupe afin de préparer un déplacement du véhicule avec un roulage électrique ou thermique. Pour cela le conducteur dispose d'une commande, comme une clé ou un bouton de démarrage, qui peut réaliser suivant la position du levier de vitesse l'ensemble des actions sur le groupe motopropulseur permettant la mobilité du véhicule, notamment l'activation des machines électriques et le démarrage du moteur thermique. L'actionnement du groupe motopropulseur est permis notamment avec un levier de vitesse en position parking P qui donne le blocage de parking, ou en position neutre N qui donne son déblocage, le groupe motopropulseur ne pouvant dans ces deux cas entraîner le véhicule.

Toutefois après une demande de mise en action du groupe motopropulseur, le conducteur peut aussitôt déplacer le levier de vitesse avec une commande demandant une modification de l'état du blocage de parking, alors que la mise en action de ce groupe n'est pas terminée. Par exemple le conducteur peut demander un passage de la position parking à la position neutre ou à une position de roulage qui demande un déblocage, ou demander un passage vers la position parking qui demande un blocage.

De plus certaines transmissions utilisent une alimentation commune en pression hydraulique pour commander un organe nécessaire pour la mise en action, comme un embrayage, et le blocage de parking, cette alimentation pouvant présenter une puissance insuffisante pour manœuvrer simultanément ces deux organes.

En particulier on peut utiliser une pression hydraulique pour contrôler le serrage d'un embrayage d'entraînement du moteur thermique et le mouvement du blocage de parking donnant son changement d'état, des actions simultanées sur ces deux organes entraînant une chute de pression perturbant leurs fonctionnements. On peut obtenir notamment une défaillance donnant à la fois une mise en action du groupe motopropulseur et une ouverture du blocage de parking, qui ne sécurise pas l'immobilisation du véhicule.

En outre, l'état de la technique est connu du document WO2016133453A1.

La présente invention a notamment pour but d'éviter ces problèmes de l'art antérieur. Elle propose à cet effet un procédé de contrôle d'un groupe motopropulseur de véhicule automobile hybride comportant un moteur thermique et une machine électrique de traction, le véhicule étant équipé d'un levier de vitesse agissant sur un blocage de parking, pour commander une position parking, une position neutre et des positions de roulage, et équipé d'une commande de mise en action du groupe motopropulseur réalisant un démarrage du moteur thermique, ce procédé étant remarquable en ce que pendant un cycle de mise en action du groupe motopropulseur demandé par le conducteur, si ce conducteur effectue un déplacement du levier de vitesse demandant un changement d'état du blocage de parking, suivant ce déplacement il autorise ou interdit le cycle de mise en action ou sa finalisation, et il autorise ou interdit un changement d'état du blocage de parking, dans lequel lorsque le changement de position du levier de vitesse est un déplacement de la position neutre vers la position de parking, il autorise l'engagement du blocage de parking, et tant que cet engagement n'est pas terminé il interdit la mise en action du groupe motopropulseur.

Un avantage de ce procédé est qu'il permet suivant les demandes reçues de prioriser une action par rapport à l'autre, la mise en action du groupe motopropulseur, ou l'engagement ou le désengagement du blocage de parking demandé, tout en gardant une sécurité élevée. Notamment dans le cas d'un niveau d'énergie faible pour réaliser les deux actions en même temps, on priorise l'une pour éviter un échec de l'autre action.

Le procédé assure un niveau de sécurité élevé, notamment en pouvant maintenir à la fois un blocage de parking et un arrêt de la mise en action pour garder cette double protection garantissant l'immobilisation du véhicule en cas de défaillance technique d'un de ces moyens.

Le procédé de contrôle du groupe motopropulseur selon l'invention peut comporter de plus une ou plusieurs des caractéristiques suivantes, qui peuvent être combinées entre elles.

Avantageusement, le changement de position du levier de vitesse le déplaçant de la position parking vers une position de roulage, le procédé interdit le dégagement du blocage de parking, et il interrompt si nécessaire et interdit toute mise en action du groupe motopropulseur.

Avantageusement, le changement de position du levier de vitesse le déplaçant de la position neutre vers une position de roulage, le procédé interdit le dégagement du blocage de parking, et il interrompt si nécessaire et interdit toute mise en action du groupe motopropulseur.

Avantageusement, le changement de position du levier de vitesse le déplaçant de la position parking vers la position neutre, le procédé autorise la mise en action du groupe motopropulseur en permettant sa finalisation.

Dans ce cas, avantageusement pendant la mise en action du groupe motopropulseur, il applique simultanément une temporisation sur le changement d'état du blocage de parking pour à la fin de cette temporisation vérifier si cette mise en action est terminée avant d'autoriser un changement d'état de ce blocage de parking.

De plus, si la mise en action n'est pas terminée à la fin de la première temporisation, il applique une deuxième temporisation pour vérifier à la fin si la mise en action est terminée, et si elle n'est pas terminée il interdit complètement le dégagement du blocage de parking jusqu'à ce que le conducteur exerce une nouvelle manœuvre sur le levier de vitesse.

L'invention a aussi pour objet un véhicule automobile équipé de dispositifs mettant en œuvre un procédé de contrôle comprenant l'une quelconque des caractéristiques précédentes, remarquable en ce que le groupe motopropulseur comporte un embrayage disposé entre le moteur thermique et une machine électrique de démarrage de ce moteur thermique.

En particulier, l'embrayage et le blocage de parking peuvent être actionnés à partir d'une même alimentation en pression hydraulique.

L'invention sera mieux comprise et d'autres caractéristiques et avantages apparaîtront plus clairement à la lecture de la description ci-après donnée à titre d'exemple, en référence aux dessins annexés dans lesquels :
[Fig. 1] est un schéma présentant les superviseurs électroniques mis en œuvre par le procédé selon l'invention ;
[Fig. 2] est un schéma fonctionnel du procédé selon l'invention ; et
[Fig. 3] est un tableau présentant les priorisation dans différents cas de déplacement du levier de vitesse.

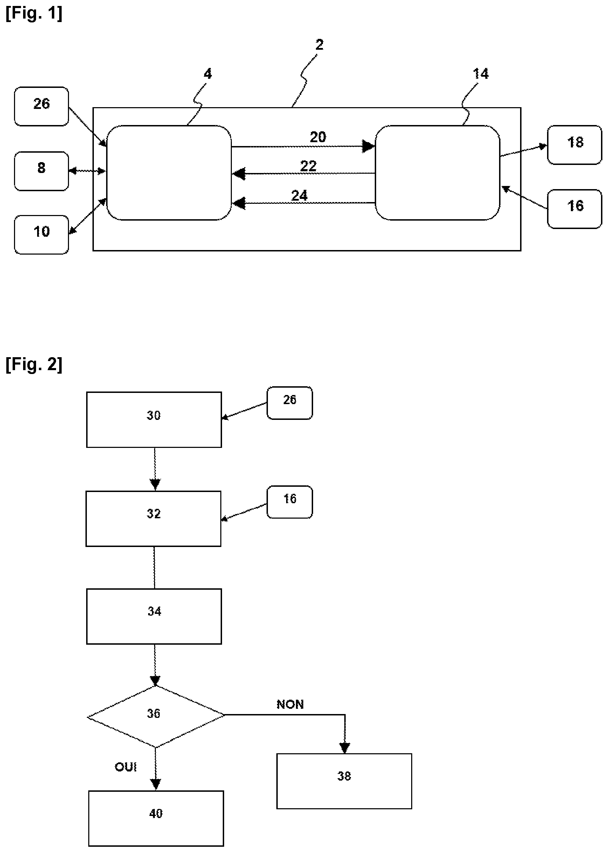

La figure 1 présente pour un véhicule automobile hybride, un superviseur du groupe motopropulseur 2 comportant un superviseur de la fonction de mise en action de ce groupe motopropulseur 4, et un superviseur de la fonction de blocage de parking 14. Le superviseur de mise en action du groupe 4 échange des informations avec une machine électrique de traction 8, un moteur thermique 10 relié à la chaîne cinématique par un embrayage, et une commande de mise en action actionnée par le conducteur 26 utilisant en particulier une clé ou un bouton de démarrage.

Le superviseur de blocage de parking 14 échange des informations avec un levier de commande de vitesse 16, et un blocage de parking 18 qui peut être disposé dans la transmission du moteur thermique ou ailleurs, permettant de bloquer des roues du véhicule.

Le superviseur de mise en action 4 envoie au superviseur de blocage de parking 14 des informations sur l'état du groupe motopropulseur 20, ce dernier superviseur envoyant au superviseur de mise en action des informations sur la position du levier de vitesse 22 et sur l'état du blocage de parking 24.

Le véhicule hybride peut être rechargeable sur un réseau de distribution d'électricité, ou non rechargeable, et comporter une ou plusieurs machines électriques de traction qui peuvent être intégrées dans la transmission du moteur thermique disposée à l'avant, ou disposées sur le train arrière.

La transmission du groupe motopropulseur peut comporter en particulier un embrayage d'entraînement du moteur thermique à partir d'une machine électrique pour assurer son démarrage, par l'intermédiaire d'un embrayage serré par une pression hydraulique de commande. Le blocage de parking peut comporter aussi une commande hydraulique.

Dans le cas où l'embrayage et le blocage de parking utilisent une même source de puissance présentant des difficultés pour mettre simultanément en œuvre les deux fonctions, il est important de prévoir une priorité d'une commande par rapport à l'autre pour assurer au mieux la rapidité des actions demandées, et la sécurité.

La figure 2 présente un schéma fonctionnel comportant une première étape 30 de demande de mise en action du groupe motopropulseur venant de la commande 26 actionnée par le conducteur. La mise en action du groupe motopropulseur effectue différentes opérations permettant la mobilité du véhicule, par exemple l'activation de la machine électrique de traction 8 ou le démarrage du moteur thermique 10.

Une deuxième étape suivante 32 comporte la détection d'un changement de position du levier de vitesse 16 actionné par le conducteur.

Une troisième étape suivante 34 comporte l'identification d'une demande de changement d'état du blocage de parking 18 entraînée par le changement de position du levier de vitesse détecté de la deuxième étape 32.

Une quatrième étape suivante 36 réalise une condition sur l'identification effectuée dans la troisième étape 34. Dans le cas où la quatrième étape 36 détecte une absence de demande NON de changement d'état du blocage de parking 18, on a alors une cinquième étape suivante 38 d'autorisation de la mise en action complète du groupe motopropulseur.

Dans le cas où la quatrième étape 36 détecte une demande OUI de changement d'état du blocage de parking 18, on a alors une sixième étape suivante 40 d'analyse des priorités pour décider de la fin du cycle de mise en action avant une éventuelle autorisation de déplacement du blocage de parking, ou l'interruption de la mise en action avant cette éventuelle autorisation.

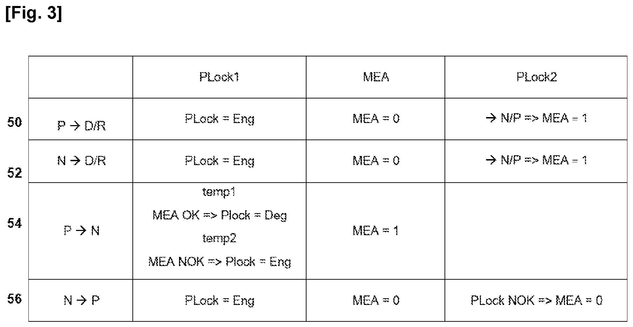

La figure 3 présente dans une première colonne le changement de position du levier de vitesse 16 effectué par le conducteur. La deuxième colonne PLock1 présente l'autorisation donnée par le superviseur de mise en action 4 transmise au superviseur de blocage du parking 14, concernant le changement d'état du blocage de parking 18, pour un accord de dégagement PLock=Deg ou pour un accord d'engagement PLock=Eng.

La troisième colonne MEA présente l'autorisation de finalisation de la mise en action du groupe motopropulseur, pour une autorisation MEA=1 et pour un refus d'autorisation MEA=0.

La quatrième colonne PLock2 présente une autorisation suivante de changement d'état du blocage de parking donnée par le superviseur de mise en action 4, après son premier changement d'état ou après la fin de mise en action.

La première ligne 50 présente dans sa première colonne un changement de position P→D/R qui déplace le levier de vitesse de la position parking P vers une position de roulage en marche avant D ou arrière R, demandant un dégagement du blocage de parking pour permettre ce roulage.

La deuxième colonne indique que le superviseur de mise en action 4 transmet au superviseur de blocage du parking 14 l'interdiction de dégagement du blocage de parking PLock=Eng.

La troisième colonne indique que le superviseur de mise en action 4 interrompt la mise en action en cours et interdit toute mise en action MEA=0.

La quatrième colonne indique que seulement si le levier de vitesse revient dans la position neutre ou parking → N/P, alors le superviseur de mise en action 4 autorise une mise en action du groupe motopropulseur MEA=1

De cette manière on assure sur une position de roulage D, R à la fois un maintien du blocage de parking et une interdiction de mise en action du groupe motopropulseur, formant une double sécurité qui même avec une défaillance assure l'immobilisation du véhicule.

Une autorisation suivante de mise en action du groupe motopropulseur ne peut être donnée qu'après un mouvement du levier vers la position neutre N ou parking P, seules positions autorisées pour cette mise en action car ne donnant pas de possibilité de déplacement du véhicule.

La deuxième ligne 52 présente dans sa première colonne un changement de position N→D/R qui déplace le levier de vitesse de la position neutre N vers une position de roulage en marche avant D ou arrière R, demandant un dégagement du blocage de parking.

La deuxième colonne indique que le superviseur de mise en action 4 n'autorise pas ce dégagement du blocage de parking PLock=Eng, en envoyant une information au superviseur de blocage du parking 14 qui interdit cette action

La troisième colonne indique que le superviseur de mise en action 4 interrompt la mise en action en cours et interdit toute mise en action MEA=0.

La quatrième colonne indique comme pour la ligne précédente 50, que seulement si le levier de vitesse revient dans la position neutre ou parking → N/P, alors le superviseur de mise en action 4 autorise une mise en action du groupe motopropulseur MEA=1

On assure aussi une interdiction du déblocage de parking empêchant tout déplacement du véhicule. Une autorisation suivante de mise en action du groupe motopropulseur ne peut être donnée qu'après un mouvement du levier vers la position neutre N ou parking P.

La troisième ligne 54 présente dans sa première colonne un changement de position P→N qui déplace le levier de vitesse de la position parking P vers la position neutre N, demandant un dégagement du blocage de parking.

La troisième colonne indique que le superviseur de mise en action 4 autorise la mise en action MEA=1, qui est prioritaire.

La deuxième colonne indique que le superviseur de mise en action 4 demande au superviseur de blocage du parking 14 une première temporisation temp1 pour vérifier la fin de la mise en action MEA OK avant d'autoriser le dégagement du blocage de parking Plock=Deg. A la fin de la première temporisation temp1 si la mise en action n'est pas terminée MEA NOK, il demande une deuxième temporisation temp2 pour attendre la fin de la mise en action. Après cette deuxième temporisation temp2, si la mise en action n'est pas terminée alors il interdit complètement le dégagement du blocage de parking 12 jusqu'à ce que le conducteur exerce une nouvelle manœuvre sur le levier de vitesse 16.

En variante une unique temporisation temp1 pourrait être utilisée avant d'appliquer l'interdiction complète de dégagement du blocage de parking 12 jusqu'à la nouvelle manœuvre sur le levier de vitesse 16.

On assure une priorisation de la mise en action du groupe motopropulseur, l'arrivée sur la position neutre N ne donnant pas de possibilité de roulage du véhicule, le dégagement du blocage de parking n'est pas prioritaire.

La quatrième ligne 56 présente dans sa première colonne un changement de position N→P qui déplace le levier de vitesse de la position neutre N vers la position de parking P, demandant un engagement du blocage de parking.

La deuxième colonne indique que le superviseur de mise en action 4 autorise cet engagement du blocage de parking PLock=Eng en envoyant une information au superviseur de blocage du parking 14.

La troisième colonne indique que le superviseur de mise en action 4 interrompt la mise en action en cours et interdit toute mise en action MEA=0.

La quatrième colonne indique que tant que le blocage de parking n'est pas engagé PLock NOK, on a une interdiction de mise en action du groupe motopropulseur MEA=0.

On assure une priorisation de l'engagement du blocage de parking ou de la mise en action du groupe motopropulseur qui évite une action simultanée sur ces deux fonctions pouvant entraîner une défaillance, en particulier dans le cas d'une alimentation commune pour ces deux fonctions délivrant une puissance insuffisante.

## Revendications

1. Procédé de contrôle d'un groupe motopropulseur de véhicule automobile hybride comportant un moteur thermique (10) et une machine électrique de traction (8), le véhicule étant équipé d'un levier de vitesse (16) agissant sur un blocage de parking (18), pour commander une position parking (P), une position neutre (N) et des positions de roulage (D, R), et équipé d'une commande de mise en action du groupe motopropulseur (26) réalisant un démarrage du moteur thermique, ce procédé, pendant un cycle de mise en action du groupe motopropulseur demandé par le conducteur, si ce conducteur effectue un déplacement du levier de vitesse (16) demandant un changement d'état du blocage de parking (18), suivant ce déplacement, autorisant ou interdisant mise en action ou sa finalisation, et autorisant ou interdisant un changement d'état du blocage de parking (18), **caractérisé en ce que** lorsque le changement de position du levier de vitesse (16) est un déplacement de la position neutre (N) vers la position de parking (P), il autorise l'engagement du blocage de parking (PLock=Eng), et tant que cet engagement n'est pas terminé il interdit la mise en action du groupe motopropulseur (MEA=0).

2. Procédé de contrôle selon la revendication 1, **caractérisé en ce que** le changement de position du levier de vitesse (16) le déplaçant de la position parking (P) vers une position de roulage (D, R), il interdit le dégagement du blocage de parking (PLock=Eng), et il interrompt si nécessaire et interdit toute mise en action du groupe motopropulseur (MEA=0).

3. Procédé de contrôle selon la revendication 1 ou 2, **caractérisé en ce que** le changement de position du levier de vitesse (16) le déplaçant de la position neutre (N) vers une position de roulage (D, R), il interdit le dégagement du blocage de parking (PLock=Eng), et il interrompt si nécessaire et interdit toute mise en action du groupe motopropulseur (MEA=0).

4. Procédé de contrôle selon l'une quelconque des revendications précédentes, **caractérisé en ce que** le changement de position du levier de vitesse (16) le déplaçant de la position parking (P) vers la position neutre (N), il autorise la mise en action du groupe motopropulseur (MEA=1) en permettant sa finalisation.

5. Procédé de contrôle selon la revendication 4, **caractérisé en ce que** pendant la mise en action du groupe motopropulseur, il applique simultanément une temporisation (temp1) sur le changement d'état du blocage de parking (18) pour à la fin de cette temporisation vérifier si cette mise en action est terminée (MEA OK) avant d'autoriser un changement d'état de ce blocage de parking (PLock=Deg).

6. Procédé de contrôle selon la revendication 5, **caractérisé en ce que** si la mise en action n'est pas terminée à la fin de la première (temp1), il applique une deuxième temporisation (temp2) pour vérifier à la fin si la mise en action est terminée, et si elle n'est pas terminée (MEA NOK) il interdit complètement le dégagement du blocage de parking (PLock=Eng) jusqu'à ce que le conducteur exerce une nouvelle manœuvre sur le levier de vitesse (16).

7. Véhicule automobile hybride comportant un moteur thermique (10) et une machine électrique de traction (8), le véhicule étant équipé d'un levier de vitesse (16) agissant sur un blocage de parking (18), pour commander une position parking (P), une position neutre (N) et des positions de roulage (D, R), et équipé d'une commande de mise en action du groupe motopropulseur (26) réalisant un démarrage du moteur thermique, et étant équipé de dispositifs mettant en œuvre un procédé de contrôle selon l'une quelconque des revendications précédentes, **caractérisé en ce que** le groupe motopropulseur comporte un embrayage disposé entre le moteur thermique (10) et une machine électrique de démarrage de ce moteur thermique (10).

8. Véhicule automobile selon la revendication 7, **caractérisé en ce que** l'embrayage et le blocage de parking (18) sont actionnés à partir d'une même alimentation en pression hydraulique.

## Patentansprüche

1. Verfahren zur Steuerung eines Antriebsstrangs eines Hybrid-Kraftfahrzeugs mit einem Verbrennungsmotor (10) und einer elektrischen Antriebsmaschine (8), wobei das Fahrzeug mit einem auf eine Parksperre (18) wirkenden Schalthebel (16) zur Steuerung einer Parkstellung (P), einer Neutralstellung (N) und der Fahrstellungen (D, R) ausgerüstet ist und mit einer Betätigungssteuerung des Antriebsstrangs (26) zum Starten des Verbrennungsmotors versehen ist, wobei das Verfahren während eines Betätigungszyklus des vom Fahrer angeforderten Antriebsstrangs durchgeführt wird, wenn der Fahrer eine Bewegung des Schalthebels ausführt (16), die eine Änderung des Zustands der Parkblockierung (18) nach dieser Verschiebung anfordert, die Aktivierung oder deren Fertigstellung ermöglicht oder verbietet und eine Änderung des Zustands der Parkblockierung (18) ermöglicht oder verbietet, **dadurch gekennzeichnet, dass** die Änderung der Stellung des Schalthebels (16) ist eine Verschiebung von der Neutralstellung (N) in die Parkstellung (P), sie ermöglicht das Einrücken der Parksperre (PLock=Eng) und verhindert, dass der Antriebsstrang in Betrieb gesetzt wird, solange dieser Eingriff nicht abgeschlossen ist (MEA=0).

2. Verfahren zur Steuerung nach Anspruch 1, **dadurch gekennzeichnet, dass** die Änderung der Position des Schalthebels (16) ihn von der Parkposition (P) in eine Rollposition (D, R) bewegt, das Lösen der Parkblockierung (PLock=Eng) verhindert, und erforderlichenfalls jede Betätigung des Antriebsstrangs unterbricht und verhindert (MEA=0).

3. Verfahren zur Steuerung Anspruch 1 oder 2, **dadurch gekennzeichnet, dass** die Änderung der Position des Schalthebels (16) ihn von der Neutralposition (N) in eine Rollposition (D, R) bewegt, das Lösen der Parkblockierung (PLock=Eng) verhindert und, falls erforderlich, jede Betätigung des Antriebsstrangs unterbricht (MEA=0).

4. Verfahren zur Steuerung nach einem der vorhergehenden Ansprüche, **dadurch gekennzeichnet, dass** die Änderung der Position des Schalthebels (16) ihn von der Parkposition (P) in die neutrale Position (N) bewegt, es die Betätigung des Antriebsstrangs (MEA=1) ermöglicht, indem es seine Fertigstellung ermöglicht.

5. Verfahren zur Steuerung Anspruch 4, **dadurch gekennzeichnet, dass** es während der Betätigung des Antriebsstrangs gleichzeitig eine Verzögerung (temp1) auf die Zustandsänderung der Parkblockierung (18) anwendet, um am Ende dieser Verzögerung zu überprüfen, ob diese Betätigung abgeschlossen ist (MEA OK), bevor eine Zustandsänderung dieser Parkblockierung genehmigt wird (PLock=Deg).

6. Verfahren zur Steuerung Anspruch 5, **dadurch gekennzeichnet, dass** es, wenn die Betätigung nicht am Ende der ersten (temp1) beendet ist, eine zweite Verzögerung (temp2) anwendet, um am Ende zu überprüfen, ob die Betätigung beendet ist, und wenn sie nicht beendet ist (MEA NOK), es das Lösen der Parksperre (PLock=Eng) vollständig verbietet, bis der Fahrer eine erneute Betätigung des Schalthebels (16) ausübt.

7. Hybrid-Kraftfahrzeug mit einem Verbrennungsmotor (10) und einer elektrischen Zugmaschine (8), wobei das Fahrzeug mit einem auf eine Parksperre (18) wirkenden Schalthebel (16) zur Steuerung einer Parkstellung (P), einer Neutralstellung (N) und der Fahrstellungen (D, R) ausgestattet ist, und mit einer Betätigungssteuerung des Antriebsstrangs (26), der einen Start des Verbrennungsmotors bewirkt, und mit Einrichtungen ausgestattet ist, die ein Steuerverfahren nach einem der vorhergehenden Ansprüche durchführen, **dadurch gekennzeichnet, dass** der Antriebsstrang eine Kupplung aufweist, die zwischen dem Verbrennungsmotor angeordnet ist (10) und einer elektrischen Anlassmaschine für diesen Verbrennungsmotor (10).

8. Kraftfahrzeug nach Anspruch 7, **dadurch gekennzeichnet, dass** die Kupplung und die Parksperre (18) von derselben Hydraulikdruckversorgung aus betätigt werden.

## Claims

1. Method for controlling a hybrid motor vehicle powertrain comprising a heat engine (10) and an electric traction machine (8), the motor vehicle being equipped with a gear lever (16) acting on a parking standstill (18), to order a parking position (P), a neutral position (N) and running positions (D, R), and equipped with a order for actuating the powertrain (26) performing a starting of the heat engine, this method, during a cycle of actuation of the powertrain ordered by the driver, if this driver performs a movement of the gear lever (16) requesting a change of status of the parking standstill (18), according to this movement, enabling or prohibiting the actuation or its finalisation, and enabling or prohibiting a change of status of the parking standstill (18), **characterised in that**
the change of position of the gear lever (16) is a displacement of the neutral position (N) towards the parking position (P), it permits the engagement of the parking standstill (PLock=Eng), and as long as this engagement is not completed it prohibits the actuation of the power train (MEA=0).

2. Control method according to claim 1, wherein the change of position of the gear lever (16) moves it from the parking position (P) to a running position (D, R), it prevents the disengagement of the parking standstill (Lock=Eng), and it interrupts if necessary and prevents any actuation of the power train (MEA=0).

3. Control method according to claim 1 or 2, wherein the change of position of the gear lever (16) moves it from the neutral position (N) to a running position (D, R), it prevents the disengagement of the parking standstill (Lock=Eng), and it interrupts if necessary and prohibits any actuation of the power train (MEA=0).

4. Control method according to any one of the previous claims, **characterised in that** the change of position of the gear lever (16) moving it from the parking position (P) to the neutral position (N), it permits the actuation of the power train (MEA=1) by allowing its finalisation.

5. Control method according to claim 4, wherein, during the actuation of the power train, it simultaneously applies a time delay (temp 1) to the change of status of the parking standstill (18) to check whether this actuation has ended (MEA OK) before permitting a change of status of this parking standstill (PLock=Deg).

6. Control method according to claim 5, wherein if the actuation is not completed at the end of the first (temp 1), it applies a second time delay (temp 2) to check at the end if the actuation is completed, and if it is not completed (MEA NOK) it completely prohibits the disengagement of the parking standstill (PLock=Eng) until the driver exerts a new manoeuvre on the gear lever (16).

7. Hybrid motor vehicle comprising a heat engine (10) and an electric traction machine (8), the vehicle being equipped with a gear lever (16) acting on a parking standstill (18), to order a parking position (P), a neutral position (N) and running positions (D, R), and equipped with a order for actuating the power train (26) performing a starting of the heat engine, and being equipped with devices implementing a control method according to any one of the previous claims, wherein the power train comprises a clutch arranged between the heat engine (10) and an electric machine for starting this heat engine (10).

8. Motor vehicle according to claim 7, wherein the clutch and the parking standstill (18) are actuated from the same hydraulic pressure supply.
